# EUROPÄISCHE PATENTSCHRIFT

(11) **EP 1 029 112 B1**
(45) Veröffentlichungstag und Bekanntmachung des Hinweises auf die Patenterteilung: **22.05.2002**
(21) Anmeldenummer: 99947479.4
(22) Anmeldetag: 07.10.1999
(51) Int. Cl.: C23C 22/77

(54) **VERFAHREN ZUM STEUERN EINER PHOSPHATIERANLAGE**
METHOD OF CONTROLLING A PHOSPHATING DEVICE
PROCEDE DE COMMANDE D'UNE INSTALLATION DE PHOSPHATAGE

(30) Priorität: 15.12.1998 DE 19857799
(43) Veröffentlichungstag der Anmeldung: 23.08.2000
(60) Teilanmeldung: 01113153.9
(73) Patentinhaber: Henkel Kommanditgesellschaft auf Aktien, 40589 Düsseldorf-Holthausen (DE)
(72) Erfinder: SEEMANN, Jens, D-40597 Düsseldorf (DE); BARTIK-HIMMLER, Ibolya, D-51519 Odenthal (DE); OPITZ, Werner, D-40764 Langenfeld (DE); KLING, Hans-Willi, D-42277 Wuppertal (DE)
(86) Internationale Anmeldenummer: EP9907527
(87) Internationale Veröffentlichungsnummer: WO0036183

(56) Entgegenhaltungen:
- GB-A- 1 518 534
- GB-A- 1 557 779
- GB-A- 2 153 854
- US-A- 4 026 737
- US-A- 5 117 370

## Beschreibung

Die Erfindung betrifft ein Verfahren zum Steuern einer Phosphatieranlage, in der ein Werkstück unter Einwirkung chemischer und/oder physikalischer Prozesse bearbeitet wird. Insbesondere betrifft sie Vorgänge, bei denen die Oberfläche des Werkstücks chemisch verändert und/oder beschichtet wird. Ein Anwendungsfall hierfür ist die Phosphatierung und die anschließende Lackierung von Metallen, insbesondere von Automobilkarossen.

Es gibt eine Vielzahl technischer Prozesse, bei denen ein Werkstück unter Verwendung chemischer und/oder physikalischer Behandlungsverfahren bearbeitet wird. Ein Ziel dieser Bearbeitung kann in einer chemischen Veränderung der Oberfläche des Werkstücks oder in dessen Beschichtung, beispielsweise dessen Lackierung, liegen. Es ist häufiges Ziel solcher Verfahren, den Oberflächen der Werkstücke erwünschte technische oder ästhetische Eigenschaften zu verleihen. Beispielsweise genannt seien Verfahren, mit denen die Oberfläche der Werkstücke vor Korrosion geschützt werden können oder mit denen man der Werkstückoberfläche ein erwünschtes, ästhetisch ansprechendes Aussehen verleiht.

In allen diesen Fällen hat die Phosphatierung der Werkstücke unter Einwirkung chemischer und/oder physikalischer Prozesse das Ziel, bestimmte technische oder ästhetische Effekte zu bewirken. Ob der erwünschte Erfolg eintritt, hängt von dem Substrat und von den gewählten Parametern der chemischen und/oder physikalischen Prozesse ab. Je genauer man weiß, welche wählbaren Parameter das erwünschte Ergebnis wie beeinflussen, können die Parameter so eingestellt werden, daß das erwünschte Ergebnis möglichst sicher erreicht wird bzw. daß die angestrebten technischen und/oder ästhetischen Ergebnisse der Phosphatierung möglichst gut werden. Dabei werden unterschiedliche Kenngrößen definiert, die man als charakteristisch für das angestrebte Ergebnis hält. Diese Kenngrößen korrelieren auf unterschiedliche Weise mit einem oder mehreren der Parameter der chemischen und/oder physikalischen Prozesse, mit denen das erwünschte Ergebnis erreicht werden soll. Die Erfahrungen, welche Parameter der chemischen und/oder physikalischen Prozesse das Ergebnis auf welche Weise beeinflussen, sind meistens empirischer Natur und wurden in Versuchsreihen gewonnen und verbessert. Dennoch ist keineswegs sichergestellt, daß man bisher alle Korrelationen zwischen den Parametern der chemischen, und/oder physikalischen Prozesse und den erzielten Ergebnissen der Phosphatierung hinreichend gut kennt und daß man diese Parameter so einstellt, daß das erwünschte Ergebnis möglichst optimal erreicht wird. Daher besteht ein Bedarf, die bekannten Korrelationen zu verfeinem sowie neue Korrelationen aufzufinden. Weiterhin besteht ein Bedarf, bei Abweichungen des erhaltenen Ergebnisses von dem angestrebten Ergebnis diejenigen Parameter der chemischen und/oder physikalischen Prozesse zu kennen und so variieren zu können, daß Abweichungen des erhaltenen Ergebnisses von dem angestrebten Ergebnis möglichst sicher korrigiert werden können.

In der GB-A-2 153 854 wird ein Verfahren sowie eine Vorrichtung zur automatischen Kontrolle der Zinkionen-Konzentration in Phosphatierbädem auf Basis von wäßrigen Zinkphosphat-Lösungen beschrieben. Zu vorgegebenen Zeitpunkten wird jeweils in einer Badprobe die Zinkionen-Konzentration mit Hilfe einer Analysenzelle, enthaltend eine Silber-Anode und eine Quecksilber-Tropfkathode, bestimmt. Bei Abweichungen von einem vorgegebenen optimalen Konzentrationswert wird jeweils eine entsprechende Ergänzungslösung zum Bad zudosiert.

Die GB-A-1 557 779 beschreibt ein Phosphatierverfahren auf Basis saurer Phosphatierlösungen, enthaltend Zink, Phosphat und Alkalimetallionen. Die zuvor eingestellten optimalen Konzentrationswerte der Inhaltsstoffe werden durch Leitfähigkeitsmessung des Phosphatierbades überwacht und bei Abweichungen durch Zugabe entsprechender Ergänzungslösungen emeut eingestellt, so daß ein konstanter Leitfähigkeitswert resultiert.

Die US-A-5 117 370 offenbart ein Verfahren zur quantitativen Analyse der Zusammensetzung von wäßrigen Phosphatierbädem. In einer geeigneten Probe des Bades werden jeweils die Konzentration der Zink- und Phosphationen mittels Röntgenfluoreszensanalyse, der pH-Wert mittels ionenspezifischer Elektroden und die Konzentration der Nitritionen mittels Spektrophotometer oder Colorimeter automatisch bestimmt. Ein Rechner überwacht die erhaltenen Analysewerte und regelt automatisch den Erhalt der zuvor gewählten optimalen Konzentrationswerte durch entsprechende Zudosierung der Badinhaltsstoffe.

Die GB-A-1 518 534 betrifft die kontinuierliche Überwachung von Phosphatierbädem, die Nitrit enthalten. Während des Phosphatierprozesses wird ein Teil des Bades über einen Anionaustauscher, der mit Nitrit geladen ist, geleitet, wobei gleichzeitig die Konzentration der Nitritionen im Bad kontrolliert wird. Auf diese Weise werden unerwünscht hohe Konzentrationen an Alkalimetall-, Ammonium- und Nitrationen im Bad unterbunden.

Demgegenüber betrifft die vorliegende Erfindung ein Verfahren zum Steuern einer Phosphatieranlage zum Phosphatieren von Metalloberflächen vor einer Lackierung, dadurch gekennzeichnet, daß man
a) eine Korrelation zwischen einem oder mehreren variablen Parametern der chemischen und/oder physikalischen Prozesse der Phosphatieranlage und einer oder mehreren Kenngrößen, die für den Erfolg der Phosphatierung charakteristisch sind, erstellt, hieraus Regeln ableitet, die die Abhängigkeit der Kenngröße oder der Kenngrößen von den variablen Parametern beschreiben, und die Korrelation und/oder die hieraus abgeleiteten Regeln in einem Steuersystem für die Phosphatieranlage abspeichert,
b) kontinuierlich oder diskontinuierlich die eine oder mehrere Kenngrößen an der phosphatierten Metalloberfläche mißt, die für den Erfolg der Phosphatierung charakteristisch sind, und
c) bei einer Abweichung dieser Kenngrößen von einem vorgegebenen Sollwertbereich oder bei einem signifikanten Trend dieser Kenngrößen, sich in Richtung der Grenzen des Sollwertbereichs zu verändern, denjenigen oder diejenigen variablen Parameter der chemischen und/oder physikalischen Prozesse der Phosphatieranlage, der oder die am stärksten mit dieser Kenngröße korreliert sind, gemäß der im Teilschritt a) festgestellten Korrelation und/oder den hieraus abgeleiteten Regeln in diejenige Richtung verändert, die der Abweichung der Kenngröße oder der Kenngrößen vom Sollbereich entgegenwirkt, wobei die Veränderung der variablen Parameter der chemischen und/oder physikalischen Prozesse der Phosphatieranlage ohne menschliches Eingreifen automatisch erfolgt oder daß das Steuersystem eine entsprechende Empfehlung zur Veränderung der variablen Parameter ausgibt.

Dabei ist es selbstverständlich ratsam, nur solche Parameter der chemischen und/oder physikalischen Prozesse der Phosphatieranlage zu ändern, die die anderen für das Ergebnis charakteristischen Kenngrößen nicht negativ beeinflussen. Man wählt daher diejenigen Parameter der chemischen und/oder physikalischen Prozesse aus, deren Veränderung möglichst stark mit der abweichenden Kenngröße korreliert ist, und deren Änderung auf andere Kenngrößen keinen negativen Effekt hat. Dies kann beispielsweise mit einem auf Art eines Expertensystems arbeitenden Computerprogramms erfolgen.

Man führt das erfindungsgemäße Verfahren in der Weise aus, daß im Teilschritt c) die Veränderung der variablen Parameter der chemischen und/oder physikalischen Prozesse der Phosphatieranlage ohne menschliches Eingreifen automatisch erfolgt oder daß das Steuersystem für das Verfahren eine entsprechende Empfehlung zur Veränderung der variablen Parameter ausgibt. Die erste Alternative entspricht einem vollautomatischen Betreiben der Phosphatieranlage, in der zweiten Alternative erhält das Bedienungspersonal als Ergebnis des erfindungsgemäßen Verfahrens konkrete Hinweise, welche Parameter auf welche Weise verändert werden sollten.

Vorzugsweise richtet man das Steuersystem für das erfindungsgemäße Verfahren so ein, daß es "lernfähig" ist. Demnach setzt man das erfindungsgemäße Verfahren vorzugsweise derart ein, daß während des Betriebs der Phosphatieranlage die Korrelation zwischen den variablen Parametern der chemischen und/oder physikalischen Prozesse der Phosphatieranlage und einer oder mehreren Kenngrößen, die für den Erfolg der Phosphatierung charakteristisch sind, und/oder die hieraus abgeleiteten Regeln angepaßt werden. Man sorgt also zum einen dafür, daß das Steuersystem kontinuierlich oder zu bestimmten Zeiten Information über die Werte möglichst vieler Parameter der chemischen und/oder physikalischen Prozesse der Phosphatieranlage erhält. Dies kann beispielsweise dadurch geschehen, daß chemische Prozeßflüssigkeiten, die bei der Phosphatierung der Werkstücke eingesetzt werden, automatisch analysiert werden und die Ergebnisse der Analysen in das Steuersystem für das erfindungs-gemäße Verfahren übertragen werden. Selbstverständlich kann dies auch durch manuelle Eingabe geschehen. Zum anderen sorgt man dafür, daß das Steuersystem möglichst umfassend über den Erfolg der chemischen und/oder physikalischen Phosphatierung informiert wird, daß es also Informationen über die Werte möglichst vieler Kenngrößen erhält, die für das Phosphatierergebnis wesentlich sind. Soweit möglich, erfolgt auch dieses vorzugsweise automatisch, ansonsten aber durch manuelle Dateneingabe. Hierdurch wird das System in die Lage versetzt, die Korrelation zwischen den aktuellen Parametern und den erzielten Ergebnissen laufend zu verbessern und gegebenenfalls neue Korrelationen aufzufinden.

Auf welche Weise die Korrelation zwischen den einzelnen variablen Parametern der chemischen und/oder physikalischen Prozesse der Phosphatieranlage und den Kenngrößen, die für den Erfolg der Phosphatierung charakteristisch sind, in dem Steuersystem abgelegt und ausgewertet werden, ist prinzipiell ohne Belang. Beispielsweise können die aus der empirisch gefundenen Korrelation abgeleiteten Regeln in Form mathematischer Gleichungen, als unscharfe Beziehungen ("fuzzy logic") oder in Form modellfreier Algorithmen wie beispielsweise neuronaler Netze ausgedrückt werden. Für mathematische Gleichungen kommen beispielsweise multilineare Regressionsmethoden oder eine partielle kleinste Quadrate Regression in Frage.

Das erfindungsgemäße Verfahren wird in einer Anlage ausgeführt, in der eine chemische Veränderung und/oder eine Beschichtung der Oberfläche des Werkstücks durchgeführt wird. Bei metallischen Werkstücken handelt es sich um Prozesse, bei denen die Metalloberfläche chemisch verändert wird. Hierdurch kann der Korrosionsschutz verbessert und/oder ein erwünschtes Aussehen der Oberfläche erzielt werden. Beispiele solcher Prozesse sind eine schichtbildende oder nichtschichtbildende Phosphatierung. Nachfolgend an eine derartige chemische Veränderung der Metalloberfläche kann diese zusätzlich beschichtet, beispielsweise lackiert oder emailliert werden. Je nach Art des Metalls und der chemischen Behandlung kann aber auch auf eine weitere Beschichtung verzichtet werden. Bei dem erfindungsgemäßen Verfahren handelt es sich um eine Phosphatieranlage zum Phosphatieren von Metalloberflächen vor einer Lackierung. Dabei führt man die Phosphatierung vorzugsweise als sogenannte schichtbildende Phosphatierung in Form einer Zinkphosphatierung durch. Hierbei bildet sich auf der Metalloberfläche eine nur wenige µm dicke Schicht aus kristallinem Zinkphosphat oder aus Phosphaten, in die als Kationen außer Zink weitere Metalle (Eisen, Nickel, Mangan ...) eingebaut sind. Solche Phosphatier-prozesse werden beispielsweise in der Metallindustrie, im Fahrzeugbau und in der Haushaltsgeräteindustrie eingesetzt.

In großtechnisch eingesetzten Anlagen wie beispielsweise im Automobilbau umfaßt die gesamte Phosphatieranlage in der Regel neben einer oder mehreren Phosphatierzonen eine oder mehrere Reinigungszonen sowie eine Aktivierungszone vor der Phosphatierung und häufig eine Nachpassivierungszone nach der Phosphatierung. Zwischen den einzelnen Behandlungsschritten in den unterschiedlichen Behandlungszonen wird in der Regel mit Wasser zwischengespült. Nach einer Nachpassivierung in der Nachpassivierungszone, auf die jedoch günstigenfalls auch verzichtet werden kann, folgt in der Regel eine Lackierung. Dabei ist im Automobilbau als ersten Lackierungsschritt derzeit eine kathodische Elektrotauchlackierung üblich. Man kann jedoch auch eine anodische Elektrotauchlackierung einsetzen oder die erste Lackschicht ohne Stromunterstützung durch Eintauchen der Werkstücke in das Lackbad oder durch Aufsprühen des Lacks aufbringen.

Beispielsweise kann in der Phosphatierungszone eine schichtbildende Phosphatierung durchgeführt werden, indem man die Metalloberfläche mit einer sauren wäßrigen Phosphatierlösung in Kontakt bringt, die 0,3 bis 3 g/l Zinkionen und 3 bis 30 g/l Phosphationen enthält. Dabei liegen bei den sauren Phosphatierlösungen mit einem pH-Wert im Bereich von etwa 2,8 bis etwa 3,8 die Phosphationen zum größten Teil als freie Phosphorsäure und als Dihydrogenphosphationen vor.

Die Zink-Gehalte in der Phosphatierlösung liegen vorzugsweise im Bereich von 0,4 bis 2 g/l und insbesondere von 0,5 bis 1,5 g/l, wie sie für Niedrig-Zink-Verfahren üblich sind. Das Gewichtsverhältnis Phosphationen zu Zinkionen in den Phosphatierbädern kann in weiten Grenzen schwanken, sofern es im Bereich zwischen 3,7 und 30 liegt. Ein Gewichtsverhältnis zwischen 10 und 20 ist besonders bevorzugt

Dabei kann das Phosphatierbad außer den Zink- und Phosphationen weitere Komponenten enthalten, wie sie derzeit in Phosphatierbädern üblich sind.

Vorzugsweise werden Phosphatierlösungen eingesetzt, die weitere ein- oder zweiwertige Metallionen enthalten, die sich erfahrungsgemäß günstig auf die Lackhaftung und den Korrosionsschutz der hiermit erzeugten Phosphatschichten auswirken. Demgemäß enthält die Phosphatierlösung vorzugsweise zusätzlich eines oder mehrere der folgenden Kationen:

| | |
|---|---|
| 0,1 | bis 4 g/l Mangan(ll), |
| 0,1 | bis 2,5 g/l Nickel (II), |
| 0,2 | bis 2,5 g/l Magnesium(ll), |
| 0,2 | bis 2,5 g/l Calcium(ll), |
| 0,002 | bis 0,2 g/l Kupfer(11), |
| 0,1 | bis 2 g/l Cobalt(II). |

Beispielsweise enthält die Phosphatierlösung außer Zinkionen als zusätzliche Kationen 0,1 bis 4 g/l Manganionen und 0,002 bis 0,2 g/l Kupferionen und nicht mehr als 0,05 g/l, insbesondere nicht mehr als 0,001 g/l Nickelionen. Wünscht man jedoch an der herkömmlichen Trikation-Technologie festzuhalten, können Phosphatierbäder eingesetzt werden, die außer Zinkionen 0,1 bis 4 g/l Manganionen und zusätzlich 0,1 bis 2,5 g/l Nickelionen enthalten.

Außer den schichtbildenden zweiwertigen Kationen enthalten Phosphatierbäder in der Regel zusätzlich Natrium-, Kalium- und/oder Ammoniumionen zur Einstellung der freien Säure.

Bei Phosphatierbädem, die für unterschiedliche Substrate geeignet sein sollen, ist es üblich geworden, freies und/oder komplexgebundenes Fluorid in Mengen bis zu 2,5 g/l Gesamtfluorid, davon bis zu 800 mg/l freies Fluorid zuzusetzen. Bei Abwesenheit von Fluorid soll der Aluminiumgehalt des Bades 3 mg/l nicht überschreiten. Bei Gegenwart von Fluorid werden infolge der Komplexbildung höhere Al-Gehalte toleriert, sofern die Konzentration des nicht komplexierten Al 3 mg/l nicht übersteigt. Die Verwendung fluoridhaltiger Bäder ist daher vorteilhaft, wenn die zu phosphatierenden Oberflächen zumindest teilweise aus Aluminium bestehen oder Aluminium enthalten. In diesen Fällen ist es günstig, kein komplexgebundenes, sondern nur freies Fluorid, vorzugsweise in Konzentrationen im Bereich 0,5 bis 1,0 g/l, einzusetzen.

Für die Phosphatierung von Zinkoberflächen ist es nicht zwingend erforderlich, daß die Phosphatierbäder sogenannte Beschleuniger enthalten. Für die Phosphatierung von Stahloberflächen ist es jedoch erforderlich, daß die Phosphatierlösung einen oder mehrere Beschleuniger enthält. Solche Beschleuniger sind im Stand der Technik als Komponenten von Zinkphosphatierbädem geläufig. Hierunter werden Substanzen verstanden, die den durch den Beizangriff der Säure an der Metalloberfläche entstehenden Wasserstoff dadurch chemisch binden, daß sie selbst reduziert werden. Oxidierend wirkende Beschleuniger haben weiterhin den Effekt, durch den Beizangriff auf Stahloberflächen freigesetzte Eisen(ll)-lonen zur dreiwertigen Stufe zu oxidieren, so daß sie als Eisen(lll)-Phosphat ausfallen können. Als Beschleuniger kommen beispielsweise in Frage:
0,2 bis 2 g/l m-Nitrobenzolsulfonationen,
0,1 bis 10 g/l Hydroxylamin in freier oder gebundener Form,
0,05 bis 2 g/l m-Nitrobenzoationen,
0,05 bis 2 g/l p-Nitrophenol,
1 bis 70 mg/l Wasserstoffperoxid in freier oder gebundener Form,
0,01 bis 0,2 g/l Nitritionen
0,05 bis 4 g/l organische N-Oxide
0,1 bis 3 g/l Nitroguanidin.

Als Cobeschleuniger können zusätzlich Nitrationen in Mengen bis zu 10 g/l zugegen sein, was sich insbesondere bei der Phosphatierung von Stahloberflächen günstig auswirken kann. Bei der Phosphatierung von verzinktem Stahl ist es jedoch vorzuziehen, daß die Phosphatierlösung möglichst wenig Nitrat enthält. Nitratkonzentrationen von 0,5 g/l sollten vorzugsweise nicht überschritten werden, da bei höheren Nitratkonzentrationen die Gefahr einer sogenannten "Stippenbildung" besteht. Hiermit sind weiße, kraterartige Fehlstellen in der Phosphatschicht gemeint.

Aus Gründen der Umweltfreundlichkeit ist Wasserstoffperoxid, aus den technischen Gründen der vereinfachten Formulierungsmöglichkeiten für Nachdosierlösungen ist Hydroxylamin als Beschleuniger besonders bevorzugt. Die gemeinsame Verwendung dieser beiden Beschleuniger ist jedoch nicht ratsam, da Hydroxylamin von Wasserstoffperoxid zersetzt wird. Setzt man Wasserstoffperoxid in freier oder gebundener Form als Beschleuniger ein, so sind Konzentrationen von 0,005 bis 0,02 g/l Wasserstoffperoxid besonders bevorzugt. Dabei kann das Wasserstoffperoxid der Phosphatierlösung als solches zugegeben werden. Es ist jedoch auch möglich, Wasserstoffperoxid in gebundener Form in Form von Verbindungen einzusetzen, die im Phosphatierbad durch Hydrolysereaktionen Wasserstoffperoxid liefern. Beispiele solcher Verbindungen sind Persalze, wie Perborate, Percarbonate, Peroxosulfate oder Peroxodisulfate. Als weitere Quellen für Wasserstoffperoxid kommen ionische Peroxide wie beispielsweise Alkalimetallperoxide in Betracht.

Hydroxylamin kann als freie Base, als Hydroxylaminkomplex oder in Form von Hydroxylammoniumsalzen eingesetzt werden. Fügt man freies Hydroxylamin dem Phosphatierbad oder einem Phosphatierbad-Konzentrat zu, wird es aufgrund des sauren Charakters dieser Lösungen weitgehend als Hydroxylammonium-Kation vorliegen. Bei einer Verwendung als Hydroxylammonium-Salz sind die Sulfate sowie die Phosphate besonders geeignet. im Falle der Phosphate sind aufgrund der besseren Löslichkeit die sauren Salze bevorzugt. Hydroxylamin oder seine Verbindungen werden dem Phosphatierbad in solchen Mengen zugesetzt, daß die rechnerische Konzentration des freien Hydroxylamins zwischen 0,1 und 10 g/l, vorzugsweise zwischen 0,2 und 6 g/l und insbesondere zwischen 0,3 und 2 g/l liegt.

Die Wirkung von Hydroxylamin als Beschleuniger kann durch die zusätzliche Verwendung von Chlorat unterstützt werden.

Als Beschleuniger kommen weiterhin organische N-Oxide in Betracht, wie sie in der deutschen Patentanmeldung DE-A-197 33 978.6 näher beschrieben sind. Als organisches N-Oxid ist N-Methylmorpholin-N-Oxid besonders bevorzugt. Vorzugsweise setzt man die N-Oxide in Kombination mit Co-Beschleunigem wie beispielsweise Chlorat, Wasserstoffperoxid, m-Nitrobenzolsulfonat oder Nitroguanidin ein. Nitroguanidin kann auch als alleiniger Beschleuniger verwendet werden, wie es beispielsweise in der DE-A-196 34 685 beschrieben ist.

Als weitere Parameter zur Steuerung von Phosphatierbädem sind dem Fachmann der pH-Wert und/oder die Gehalte an freier Säure und an Gesamtsäure bekannt, in der Regel als Punktzahl ausgedrückt. Unter der Punktzahl der freien Säure wird der Verbrauch in ml an 0,1-normaler Natronlauge verstanden, um 10 ml Badlösung bis zu einem pH-Wert von 3,6 zu titrieren. Analog gibt die Punktzahl der Gesamtsäure den Verbrauch in ml bis zu einem pH-Wert von 8,2 an. Werte der freien Säure zwischen 0 und 1,5 Punkten und der Gesamtsäure zwischen etwa 15 und etwa 30 Punkten liegen im technisch üblichen Bereich.

Die Phosphatierung kann im Spritzen, im Tauchen oder im Spritztauchen erfolgen. Die Einwirkungszeiten liegen dabei im üblichen Bereich zwischen etwa 1 und etwa 4 Minuten. Die Temperatur der Phosphatierlösung liegt im Bereich zwischen etwa 35 und etwa 70 °C und insbesondere zwischen etwa 40 und etwa 60 °C.

Demnach sind eine ganze Reihe physikalischer und chemischer Parameter wählbar, von denen der Erfolg der Phosphatierung und die Schutzwirkung des anschließend aufgebrachten Lacks abhängen. Physikalische Parameter sind insbesondere die Temperatur des Phosphatierbades und die Phosphatierzeit. Weiterhin ist wichtig, ob man die zu phosphatierenden Teile in die Phosphatierlösung eintaucht oder mit der Phosphatierlösung bespritzt oder ob man beide Verfahren in unterschiedlicher Reihenfolge nacheinander ausführt. Die einstellbaren chemischen Parameter bestehen in der Zusammensetzung der Phosphatierlösung sowie in den Gehalten an freier Säure und Gesamtsäure. Demnach können der oder die variablen Parameter ausgewählt sein aus der Temperatur der Phosphatierlösung, der Zinkkonzentration der Phosphatierlösung, dem Gehalt der Phosphatierlösung an freier Säure oder Gesamtsäure, der Konzentration eines oder mehrerer Beschleuniger in der Phosphatierlösung, der Konzentration anderer mehrwertiger Metallionen als Zink in der Phosphatierlösung, aus der Zeitdauer, in der die Metalloberfläche mit der Phosphatierlösung in Kontakt ist und aus der relativen Bewegung der Phosphatierlösung gegenüber der Metalloberfläche (Badbewegung, Spritz- oder Tauchverfahren, Spritzdruck).

Der Erfolg einer Phosphatierung, ausgedrückt in Kenngrößen, hängt jedoch nicht alleine von der Zusammensetzung des Phosphatierbades und von den physikalischen Parametern der Phosphatierung ab, sondern auch von vor- oder nachgeschalteten Behandlungsschritten. Beispielsweise kann die Zusammensetzung eines der Phosphatierung vorgeschalteten Reinigerbades für den Erfolg der Phosphatierung Bedeutung haben. Dies gilt ebenso für das Aktivierungsbad, das üblicherweise der Phosphatierung unmittelbar vorausgeht. Ebenso kann das Behandeln mit einem Nachpassivierungsbad nach der Phosphatierung und vor der Lackierung für Kenngrößen wie beispielsweise Lackhaftung und Korrosionswiderstand Bedeutung haben.

Reinigerbäder vor der Phosphatierung enthalten üblicherweise anionische und/oder nichtionische Tenside zusammen mit alkalischen Buildersubstanzen in wäßriger Lösung. Aktivierungsbäder enthalten in der Regel kolloide Titanphosphate in einer wäßrigen Lösung von Dinatriumhydrogenphosphat mit einem pH-Wert im Bereich zwischen etwa 8 und etwa 9. Nachpassivierungsbäder kennt man auf Basis von Chromaten bzw. Chromsäure, von reaktiven Polymeren wie beispielsweise aminosubstituierten Polyvinylphenolderivaten und auf Basis von komplexen Titan- und/oder Zirkonfluoriden. Daneben sind kupferhaltige Nachpassivierungsbäder bekannt. Die Wirkung dieser Bäder im Zusammenhang mit der Phosphatierung hängt von ihrer Zusammensetzung, der Temperatur, der Behandlungsdauer und der Behandlungsart (Spritzen oder Tauchen) ab. Bei zwischengeschalteten Spülschritten, insbesondere bei der letzten Spülung vor der kathodischen Tauchlackierung, kann auch die Reinheit des letzten Spülwassers, ausgedrückt durch dessen elektrischer Leitfähigkeit, Bedeutung haben. Im erfindungsgemäßen Verfahren kann die Korrelation dieser Parameter mit den Kenngrößen, die für den Erfolg der Behandlung charakteristisch sind, ermittelt und zum Steuern dieser Behandlungsschritte eingesetzt werden. Demnach besteht eine Ausführungsform des erfindungsgemäßen Verfahrens darin, daß der oder die variablen Parameter ausgewählt sind aus Temperatur und/oder Zusammensetzung eines oder mehrerer Reinigungsbäder vor der Phosphatierzone, eines Aktivierungsbades vor der Phosphatierzone undloder eines Nachpassivierungsbades nach der Phophatierzone und/oder aus der Zeitdauer, in der diese Bäder mit der Metalloberfläche in Kontakt sind.

Für die Phosphatierung gibt es eine Reihe von Kenngrößen, die für den Erfolg der Behandlung charakteristisch sind. Die Kenngrößen können beispielsweise ausgewählt sein aus dem Schichtgewicht der Phosphatschicht, der chemischen Zusammensetzung der Phosphatschicht, dem Stromfluß durch die Phosphatschicht bei kathodischer Polarisation, der Dicke eines nach der Phosphatierung aufgebrachten Elektrotauchlacks, der Haftung eines nach der Phosphatierung aufgebrachten Lacks, der Oberflächenstruktur (Rauhigkeit, Welligkeit, Glanz etc.) eines nach der Phosphatierung aufgebrachten Lacks und der Korrosionsanfälligkeit des Werkstücks nach Phosphatierung und Lackierung.

Für die Messung dieser Kenngrößen stehen unterschiedliche Methoden zur Verfügung. Das Schichtgewicht wird am einfachsten durch Ablösen der Phosphatschicht und Differenzwägung eines Probebleches bestimmt. Zerstörungsfrei kann das Schichtgewicht beispielsweise über Infrarotspektroskopie (charakteristische Schwingungen der Phosphatgruppen) ermittelt werden. Die chemische Zusammensetzung der Phosphatschicht kann nach deren Ablösen konventionell analytisch, beispielsweise durch Atomabsorptionsspektroskopie, bestimmt werden. Nach entsprechender Eichung kann der Anteil ausgewählter Elemente in der Phosphatschicht auch durch Röntgenfluoreszensmessung ermittelt werden. Die Messung des Stromflusses durch die Phosphatschicht bei kathodischer Polarisation ist eine Schnellmethode, um den Korrosionswiderstand der Phosphatschicht abzuschätzen. Die Haftung eines nach der Phosphatierung aufgebrachten Lacks kann mit Standard-Methoden wie beispielsweise Erichsen-Tiefung, T-Bend oder durch einen Steinschlagtest in Verbindung mit korrosiver Belastung ermittelt werden. Zur Prüfung der Korrosionsanfälligkeit stehen unterschiedliche Testmethoden wie beispielsweise Salzsprühtest, Wechselklimatest oder Freibewitterungstest, in der Regel ausgeführt mit durch Einritzen bewußt beschädigten Probeblechen, zur Verfügung.

Sofern die Kenngrößen nicht on-line und automatisch im Produktionsprozeß bestimmt und in das Steuersystem für das Verfahren übertragen werden können, ist es erforderlich, sie getrennt zu bestimmen und die Befunde manuell (lokal oder an einem entfernten Ort) in das Steuersystem einzugeben.

Selbstverständlich ist es zum Beginn des erfindungsgemäßen Verfahrens erforderlich, Startwerte für die Parameter der chemischen und/oder physikalischen Prozesse vorzugeben. Diese Startwerte können aus bereits früher ermittelten Korrelationen hervorgehen. Es können jedoch auch Startwerte genommen werden, die aus dem Stand der Technik für das jeweilige Phosphatierverfahren bekannt sind oder die man aus Erfahrung her kennt. Das erfindungsgemäße Verfahren dient dann dazu, diese Startparameter im Laufe des Verfahrens so zu verfeinern, daß optimale Werte für die relevanten Kenngrößen erhalten werden. Hierbei kann wiederum vorgegeben werden, daß bestimmte Parameter nur innerhalb vorzugebender Grenzen variiert werden dürfen.

Vorzugsweise zeichnet man im Verlauf des erfindungsgemäßen Verfahrens die Ergebnisse der im Teilschritt b) durchgeführten Messungen der einen oder mehreren Kenngrößen und/oder die im Teilschritt c) vorgenommenen Maßnahmen auf einem Datenträger auf. Sie stehen dann für Zwecke der Qualitätssicherung und zur Überprüfung der Korrelationen mit gegebenenfalls anderen Verfahren als im erfindungsgemäßen Prozeß verwendet zur Verfügung. Dabei kann das Aufzeichnen auf einem Datenträger lokal erfolgen, d. h. an dem Ort, an dem das erfindungsgemäße Verfahren ausgeübt wird. Die Daten können jedoch auch - kontinuierlich, diskontinuierlich oder auf eine Anforderung hin - an einen entfernten Ort übertragen oder direkt dort eingegeben werden, der sich auch außerhalb der Fabrikationsstätte befinden kann, in der der chemische und/oder physikalische Prozeß abläuft. Beispielsweise kann dieser entfernte Ort beim Hersteller der Phosphatierlösungen liegen, die in dem erfindungsgemäßen Verfahren eingesetzt werden. Dieser wird hierdurch laufend über Einzelheiten des Produktionsprozesses, beispielsweise über die Größen der variablen Parameter der chemischen und/oder physikalischen Prozesse der Phosphatieranlage informiert, ohne daß sich Personal am Ort der Phosphatieranlage aufhalten muß. Dabei wird vorzugsweise auch vorgesehen, daß die Grenzwerte der Parameter, innerhalb derer im Laufe des erfindungsgemäßen Verfahrens automatisch variiert werden kann, oder die aus der Kollelation gemäß Teilschritt a) erhaltenen Sollwerte lokal oder von einem entfernten Ort aus neu festgesetzt werden können.

Das erfindungsgemäße Verfahren hat den Vorteil, daß sich die Werte der chemischen und/oder physikalischen Parameter der Phosphatieranlage automatisch anpassen, wenn sich, beispielsweise aufgrund eines Substratwechsels, die betrachteten Kenngrößen verändern. Durch das erfindungsgemäße Verfahren werden die Werte der Parameter so eingeregelt, wie sie für das jeweils vorliegende Substrat optimal sind. Ein manuelles Eingreifen ist hierfür entweder überhaupt nicht erforderlich oder kann sich darauf beschränken, neue Grenzen für die erlaubten Wertebereiche der einzelnen Parameter festzulegen, innerhalb derer die Sollwerte nach dem erfindungsgemäßen Verfahren eingestellt werden können.

### Ausführungsbeispiel

Das erfindungsgemäße Verfahren wurde an einer Phosphatierlinie erprobt, wie sie im Automobilbau üblich ist. Hierbei werden Automobilkarossen zunächst in drei Bädern gereinigt, dann aktiviert, phosphatiert, nachpassiviert, mit einem kathodisch abscheidbaren Elektrotauchlack grundiert und anschließend mit Füller und Decklack beschichtet.

Als Kenngrößen für den Erfolg dieser Behandlungskette wurde ausgewählt:
1. Steinschlag-Kennwert nach VW-Prüfvorschrift (K-Wert: bester Wert K = 1, schlechtester Wert K = 10),
2. Lackunterwanderung gemäß DIN 53167 nach jeweils 10 einwöchigen Prüfzyklen mit einem kompletten Lackaufbau,
3. Lackdicke des kompletten Laufaufbaus,
4. Dicke KTL = sich bei vorgegebenen elektrischen Abscheideparametern ausbildende Dicke des kathodischen Elektrotauchlacks.

### Variable Parameter: (in Klammer die Sollwerte)

### Reinigerbäder und Aktivierbad (="Vorbehandlung" vor Phosphatierung):

- Bad 1:: Alkalität des ersten Reinigungsbades (in Moläquivalenten; Sollwert: 80-110)
- Bad 2:: Alkalität des zweiten Reinigungsbades (in Moläquivalenten; Sollwert: 80-110)
- Bad 3:: Alkalität des dritten Reinigungsbades (in Moläquivalenten; Sollwert: 175-185)
- Aktiv:: Leitfähigkeit des Aktivierungsbades in µS/cm² (als Maß für eingeschleppte Reinigerlösung)

### Parameter der Phosphatierung (einschließlich Nachpassivierung):

- G.S.:: Gesamtsäure (23-28 Punkte)
- F.S.:: freie Säure (0,7-1,1 Punkte)
- Zn: ...: Zinkkonzentratton im Phosphatierbad (3,0 - 3,7 Punkte entsprechend 1-1,2 g/l)
- HAS:: ...Konzentrationd des Beschleunigers Hydroxylammoniumsulfat im Phosphatierbad (2-3,5 g/l)
- Cr(VI):: .Konzentration im Nachpassivierungsbad (5,0-7,0 g/l)

### Parameter des KTL-Bades (Kathodische Tauchlackierung):

- pH:: pH-Wert
- LFK:: Leitfähigkeit im KTL-Bad in µS/cm²
- GFK:: Gesamt-Festkörperanteil in Gew.-% (19 - 20)
- PBV:: Pigment-Bindemittelverhältnis (0,57)
- MEQ:: Milliäquivalent Säure (45-55)

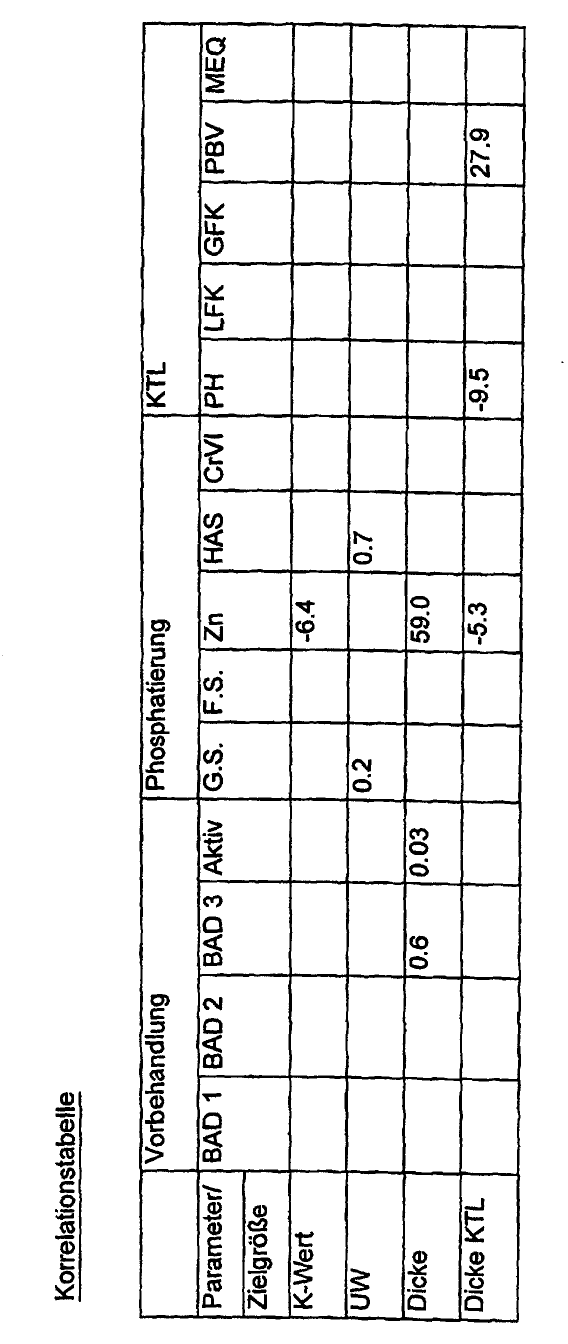

Die Korrelationstabelle zeigt die Korrelationsmatrix zwischen chemischen Parametern und untersuchter Kenngröße bei Schwankungen der Werte der chemischen Parameter, wie sie im Zeitverlauf an einer industriellen Automobil-Phosphatierlinie auftreten. Die Korrelation wurde nach der Methode der multilinearen Regression und Beurteilung der Signifikanz mittel "Anova" (= analysis of variance) bestimmt. Signifikante Regressionskoeffizienten sind in die Tabelle eingetragen.

Damit korreliert der K-Wert negativ mit der Zink-Konzentration, d. h. eine erhöhte Zink-Konzentration im Phosphatierbad führt zu den erwünschten kleineren Werten des K-Werts. Demgegenüber korreliert die Lackunterwanderung insbesondere mit den Werten für die Gesamtsäure und für die Konzentration des Beschleunigers Hydroxylamin im Phosphatierbad. Die gesamte Lackdicke hängt mit dem Zink-Gehalt des Phosphatierbads zusammen und korreliert ansonsten mit den Parametern Bad 3 und Aktiv. Im Gegensatz zur Dicke des gesamten Lackaufbaus korreliert die Dicke der KTL-Schicht negativ mit der Zink-Konzentration im Phosphatierbad und ansonsten mit pH und PBV im KTL-Bad.

## Patentansprüche

1. Verfahren zum Steuern einer Phosphatieranlage zum Phosphatieren von Metalloberflächen vor einer Lackierung, **dadurch gekennzeichnet, daß** man
a) eine Korrelation zwischen einem oder mehreren variablen Parametern der chemischen und/oder physikalischen Prozesse der Phosphatieranlage und einer oder mehreren Kenngrößen, die für den Erfolg der Phosphatierung charakteristisch sind, erstellt, hieraus Regeln ableitet, die die Abhängigkeit der Kenngröße oder der Kenngrößen von den variablen Parametern beschreiben, und die Korrelation und/oder die hieraus abgeleiteten Regeln in einem Steuersystem für die Phosphatieranlage abspeichert,
b) kontinuierlich oder diskontinuierlich die eine oder mehrere Kenngrößen an der phosphatierten Metalloberfläche mißt, die für den Erfolg der Phosphatierung charakteristisch sind, und
c) bei einer Abweichung dieser Kenngrößen von einem vorgegebenen Sollwertbereich oder bei einem signifikanten Trend dieser Kenngrößen, sich in Richtung der Grenzen des Sollwertbereichs zu verändern, denjenigen oder diejenigen variablen Parameter der chemischen und/oder physikalischen Prozesse der Phosphatieranlage, der oder die am stärksten mit dieser Kenngröße korreliert sind, gemäß der im Teilschritt a) festgestellten Korrelation und/oder den hieraus abgeleiteten Regeln in diejenige Richtung verändert, die der Abweichung der Kenngröße oder der Kenngrößen vom Sollbereich entgegenwirkt, wobei die Veränderung der variablen Parameter der chemischen und/oder physikalischen Prozesse der Phosphatieranlage ohne menschliches Eingreifen automatisch erfolgt oder daß das Steuersystem eine entsprechende Empfehlung zur Veränderung der variablen Parameter ausgibt.

2. Verfahren nach Anspruch 1, **dadurch gekennzeichnet, daß** während des Betriebs der Phosphatieranlage die Korrelation zwischen den variablen Parametern der chemischen und/oder physikalischen Prozesse der Phosphatieranlage und einer oder mehreren Kenngrößen, die für den Erfolg der Phosphatierung charakteristisch sind, und/oder die hieraus abgeleiteten Regeln angepaßt werden.

3. Verfahren nach einem oder beiden der Ansprüche 1 und 2, **dadurch gekennzeichnet, daß** die aus der Korrelation zwischen den einzelnen variablen Parametern der chemischen und/oder physikalischen Prozesse der Phosphatieranlage und einer oder mehreren Kenngrößen, die für den Erfolg der Phosphatierung charakteristisch sind, abgeleiteten Regeln in Form mathematischer Gleichungen, als unscharfe Beziehungen oder in modellfreien Algorithmen ausgedrückt werden.

4. Verfahren nach einem oder mehreren der Ansprüche 1 bis 3, **dadurch gekennzeichnet, daß** die Phosphatieranlage eine oder mehrere Phosphatierzonen sowie eine oder mehrere der folgenden Behandlungszonen aufweist: Reinigungszone, Aktivierungszone, Nachpassivierungszone.

5. Verfahren nach Anspruch 4, **dadurch gekennzeichnet, daß** in der Phosphatierungszone eine schichtbildende Phosphatierung durchgeführt wird, indem man die Metalloberfläche mit einer sauren wäßrigen Phosphatierlösung in Kontakt bringt, die 0,3 bis 3 g/l Zinkionen und 3 bis 30 g/l Phosphationen enthält.

6. Verfahren nach einem oder mehreren der Ansprüche 1 bis 5, **dadurch gekennzeichnet, daß** der oder die variablen Parameter ausgewählt sind aus der Temperatur der Phosphatierlösung, der Zinkkonzentration der Phosphatierlösung, dem pH-Wert, dem Gehalt der Phosphatierlösung an freier Säure oder Gesamtsäure, der Konzentration eines oder mehrerer Beschleuniger in der Phosphatierlösung, der Konzentration anderer mehrwertiger Metallionen als Zink in der Phosphatierlösung, aus der Zeitdauer, in der die Metalloberfläche mit der Phosphatierlösung in Kontakt ist, und aus der relativen Bewegung der Phosphatierlösung gegenüber der Metalloberfläche.

7. Verfahren nach einem oder mehreren der Ansprüche 1 bis 5, **dadurch gekennzeichnet, daß** der oder die variablen Parameter ausgewählt sind aus Temperatur und/oder Zusammensetzung eines oder mehrerer Reinigungsbäder vor der Phosphatierzone, eines Aktivierungsbades vor der Phosphatierzone und/oder eines Nachpassivierungsbades nach der Phophatierzone und/oder aus der Zeitdauer, in der diese Bäder mit der Metalloberfläche in Kontakt sind.

8. Verfahren nach einem oder mehreren der Ansprüche 1 bis 7, **dadurch gekennzeichnet, daß** die eine oder mehrere Kenngrößen, die für den Erfolg der Phosphatierung charakteristisch sind, ausgewählt sind aus dem Schichtgewicht der Phosphatschicht, der chemischen Zusammensetzung der Phosphatschicht, dem Stromfluß durch die Phosphatschicht bei kathodischer Polarisation, der Dicke eines nach der Phosphatierung aufgebrachten Elektrotauchlacks, der Haftung eines nach der Phosphatierung aufgebrachten Lacks, der Oberflächenstuktur eines nach der Phosphatierung aufgebrachten Lacks und der Korrosionsanfälligkeit des Werkstücks nach Phosphatierung und Lackierung.

9. Verfahren nach einem oder mehreren der Ansprüche 1 bis 8, **dadurch gekennzeichnet, daß** die Ergebnisse der im Teilschritt b) durchgeführten Messungen der einen oder mehreren Kenngrößen und/oder die im Teilschritt c) vorgenommenen Maßnahmen auf einem Datenträger aufgezeichnet werden.

10. Verfahren nach einem oder mehreren der Ansprüche 1 bis 9, **dadurch gekennzeichnet, daß** die Grenzwerte der Parameter, innerhalb derer im Laufe des erfindungsgemäßen Verfahrens automatisch variiert werden kann, oder die aus der Korrelation gemäß Teilschritt a) erhaltenen Sollwerte lokal oder von einem entfernten Ort aus neu festgesetzt werden können.

## Claims

1. A process for controlling a phosphating plant for phosphating metal surfaces before painting, **characterized in that**:
a) a correlation between one or more variable parameters of the chemical and/or physical processes of the phosphating plant and one or more constants which are characteristic of the outcome of phosphating is established, from it rules are derived which define the dependence of the constant or of the constants on the variable parameters and the correlation and/or the rules derived from it are stored in a control system for the phosphating plant;
b) the one or more constants that are characteristic of the outcome of phosphating are measured continuously or intermittently on the phosphated metal surface;
and
c) in the event of a deviation of these constants from a given range of set values or in the event of a significant tendency of these constants to move towards the limits of the range of set values, that/those variable parameter(s) of the chemical and/or physical processes of the phosphating plant which is/are most closely correlated with this constant is/are altered in accordance with the correlation established in step a) and/or the rules derived from it **in that** direction which counteracts the deviation of the constant or constants from the range of set values, the alteration of the variable parameters of the chemical and/or physical processes of the phosphating plant taking place automatically without human intervention or the control system issuing an appropriate recommendation to alter the variable parameters.

2. A process as claimed in claim 1, **characterized in that**, during the operation of the phosphating plant, the correlation between the variable parameters of the chemical and/or physical processes of the phosphating plant and one or more constants characteristic of the outcome of phosphating, and/or the rules derived from it, are adapted.

3. A process as claimed in one or both of claims 1 and 2, **characterized in that** the rules derived from the correlation between the individual variable parameters of the chemical and/or physical processes of the phosphating plant and one or more constants characteristic of the outcome of phosphating are expressed in the form of mathematical equations, as imprecise relations or in model-free algorithms.

4. A process as claimed in one or more of claims 1 to 3, **characterized in that** the phosphating plant has one or more phosphating zones and one or more of the following treatment zones: cleaning zone, activation zone, post-passivation zone.

5. A process as claimed in claim 4, **characterized in that**, in the phosphating zone, layer-forming phosphating is carried out by contacting the metal surface with an acidic aqueous phosphating solution containing 0.3 to 3 g/l zinc ions and 3 to 30 g/l phosphate ions.

6. A process as claimed in one or more of claims 1 to 5, **characterized in that** the variable parameter or parameters are selected from the temperature of the phosphating solution, the zinc concentration in the phosphating solution, the pH, the free acid content or total acid content in the phosphating solution, the concentration of one or more accelerators in the phosphating solution, the concentration of polyvalent metal ions other than zinc in the phosphating solution, the period for which the metal surface is in contact with the phosphating solution and the movement of the phosphating solution relative to the metal surface.

7. A process as claimed in one or more of claims 1 to 5, **characterized in that** the variable parameter or parameters are selected from the temperature and/or composition of one or more cleaning baths before the phosphating zone, of an activation bath before the phosphating zone and/or of a post-passivation bath after the phosphating zone and/or from the period for which these baths are in contact with the metal surface.

8. A process as claimed in one or more of claims 1 to 7, **characterized in that** the one or more constants characteristic of the outcome of phosphating are selected from the layer weight of the phosphate layer, the chemical composition of the phosphate layer, the current flow through the phosphate layer during cathodic polarisation, the thickness of an electrophoretic coating applied after phosphating, the adhesion of a paint applied after phosphating, the surface structure of a paint applied after phosphating and the susceptibility of the workpiece to corrosion after phosphating and painting.

9. A process as claimed in one or more of claims 1 to 8, **characterized in that** the results of the measurements of the one or more constants carried out in step b) and/or of the measures taken in step c) are recorded on a data carrier.

10. A process as claimed in one or more of claims 1 to 9, **characterized in that** the limiting values of the parameters, within which variations may be made automatically during the process, or the set values obtained from the correlation in step a) may be reset locally or from a remote location.

## Revendications

1. Procédé de commande d'une installation de phosphatage pour le phosphatage de surfaces métalliques avant un laquage,
**caractérisé en ce que**
a) on établit une corrélation entre un ou plusieurs paramètres variables des processus chimiques et/ou physiques de l'installation de phosphatage et une ou plusieurs grandeurs caractéristiques du succès du phosphatage, on en tire des règles qui décrivent la dépendance de la ou les caractéristiques envers les paramètres variables, et on enregistre la corrélation et/ou les règles qui en sont déduites dans un système de réglage pour l'installation de phosphatage,
b) on mesure de façon continue ou discontinue la ou les caractéristiques à la surface métallique phosphatée, qui témoignent du succès du phosphatage et
c) en cas d'écart avec une valeur caractéristique préindiquée ou en cas de tendance significative de ces caractéristiques à se modifier en direction des limites de l'intervalle théorique, on modifie le ou les paramètres variables des processus chimiques et/ou physiques de l'installation de phosphatage qui sont le plus fortement corrélés avec cette caractéristique, selon la corrélation dans la partie a) et/ou les règles qui en dérivent, dans un sens qui s'oppose à l'écart de la ou des caractéristiques avec l'intervalle théorique, la modification des paramètres variables des processus chimiques et/ou physiques de l'installation de phosphatage s'effectuant automatiquement sans intervention humaine, ou le système de réglage fournissant une recommandation correspondante pour la modification des paramètres variables.

2. Procédé selon la revendication 1,
**caractérisé en ce qu'**
au cours du fonctionnement de l'installation de phosphatage on adapte la corrélation entre les paramètres variables des processus chimiques et/ou physiques de l'installation de phosphatage et une ou plusieurs grandeurs caractéristiques du succès du phosphatage, et/ou les règles qu'on en tire.

3. Procédé selon l'une des revendications 1 ou 2, ou les deux,
**caractérisé en ce que**
les règles dérivées de la corrélation entre les divers paramètres variables des processus chimiques et/ou physiques de l'installation de phosphatage et une ou plusieurs grandeurs qui sont caractéristiques du succès du phosphatage sont exprimées sous forme d'équations mathématiques, sous forme de relations floues ou dans des algorithmes dépourvus de modèle.

4. Procédé selon une ou plusieurs des revendications 1 à 4,
**caractérisé en ce que**
l'installation de phosphatage présente une ou plusieurs zones de phosphatage ainsi qu'une ou plusieurs des zones de traitement suivantes : zone de nettoyage, zone d'activation, zone de post-passivation.

5. Procédé selon la revendication 4,
**caractérisé en ce que**
dans la zone de phosphatage on réalise un phosphatage formant une couche, en mettant en contact la surface du métal avec une solution acide aqueuse du phosphatage qui contient de 0,3 à 3 g/l d'ions zinc et de 3 à 30 g/l d'ions phosphate.

6. Procédé selon une ou plusieurs des revendications 1 à 5,
**caractérisé en ce que**
le ou les paramètres variables sont choisis parmi la température de la solution de phosphatage, la concentration en zinc de la solution de phosphatage, la valeur du pH, la teneur de la solution de phosphatage en acide libre ou en acide total, la concentration d'un ou plusieurs accélérateurs dans la solution de phosphatage, la concentration d'autres ions métalliques polyvalents que le zinc dans la solution de phosphatage, la durée pendant laquelle la surface du métal est en contact avec la solution de phosphatage, et le mouvement relatif de la solution de phosphatage par rapport à la surface du métal.

7. Procédé selon une ou plusieurs des revendications 1 à 5,
**caractérisé en ce que**
le ou les paramètres variables sont choisis parmi la température, la composition d'un ou plusieurs bains nettoyants avant la zone de phosphatage, d'un bain d'activation avant la zone de phosphatage et/ou d'un bain de post-passivation après la zone de phosphatage et/ou la durée pendant laquelle ces bains sont en contact avec la surface du métal.

8. Procédé selon une ou plusieurs des revendications 1 à 7,
**caractérisé en ce qu'**
une ou plusieurs grandeurs qui sont caractéristiques du succès de la phosphatation sont choisies parmi le poids de la couche de phosphate, la composition chimique de la couche de phosphate, le courant à travers la couche de phosphate dans la polarisation cathodique, l'épaisseur d'un vernis de trempage électrolytique déposé après le phosphatage, l'adhérence d'un vernis déposé après le phosphatage, la structure superficielle d'un vernis déposé après le phosphatage et la sensibilité à la corrosion de la pièce après phosphatage et vernissage.

9. Procédé selon une ou plusieurs des revendications 1 à 8,
**caractérisé en ce que**
les résultats des mesures effectuées dans l'étape partielle b), d'une ou plusieurs grandeurs, et/ou des mesures prises dans l'étape partielle c) sont enregistrés sur un support de données.

10. Procédé selon une ou plusieurs des revendications 1 à 9,
**caractérisé en ce que**
les valeurs limites des paramètres à l'intérieur desquels au cours du procédé selon l'invention on peut procéder à une variation automatique, ou les valeurs théoriques obtenues d'après la corrélation selon l'étape partielle a) peuvent être réglées à nouveau de façon locale ou à partir d'un endroit éloigné.
